Europäisches Patentamt

European Patent Office

Office européen des brevets

(11) Veröffentlichungsnummer: **0 291 553 B1**

## EUROPÄISCHE PATENTSCHRIFT

(45) Veröffentlichungstag der Patentschrift: **10.07.91**

(51) Int. Cl.⁵: **G01G 11/08**, G05D 7/06

(21) Anmeldenummer: **87107367.2**

(22) Anmeldetag: **21.05.87**

(54) **Verfahren zur Regelung einer Differential-Dosierwaage, insbesondere für Schüttgüter, und Differential-Dosierwaage zur Durchführung des Verfahrens.**

(43) Veröffentlichungstag der Anmeldung:
**23.11.88 Patentblatt 88/47**

(45) Bekanntmachung des Hinweises auf die
Patenterteilung:
**10.07.91 Patentblatt 91/28**

(84) Benannte Vertragsstaaten:
**AT CH DE FR GB IT LI NL SE**

(56) Entgegenhaltungen:
**EP-A- 2 124 91
US-A- 4 071 744
US-A- 4 320 855
US-A- 4 663 703**

(73) Patentinhaber: **CARL SCHENCK AG
Landwehrstrasse 55 Postfach 40 18
W-6100 Darmstadt(DE)**

(72) Erfinder: **Jost, Gerhard, Dr.
Ludwigstrasse 113a
W-6109 Mühltal(DE)**
Erfinder: **Werner, Hans
Brüder-Knauss-Strasse 6
W-6100 Darmstadt(DE)**

(74) Vertreter: **Brandt, Ernst-Ulrich
Fa. Carl Schenck AG Patentabteilung Landwehrstrasse 55 Postfach 40 18
W-6100 Darmstadt 1(DE)**

## Beschreibung

Die Erfindung betrifft ein Verfahren zur Regelung einer Differential-Dosierwaage, insbesondere für Schüttgüter, bei dem das Ausgangssignal einer Wägevorrichtung fortlaufend gemessen und gespeichert wird und die Meßwerte für die Ermittlung der Förderstärke verwendet werden, wobei die Austragsrate bzw. Förderstärke der Dosierwaage durch Soll-Istwert-Vergleich geregelt wird und wobei im Fall einer Störung mit einer Abweichung des Ausgangssignals der Wägevorrichtung von einem festgelegten Toleranzbereich Maßnahmen zur Ausschaltung dieser Störung getroffen werden, sowie eine Differential-Dosierwaage zur Durchführung des Verfahrens.

Differential-Dosierwaagen arbeiten nach dem Prinzip der gravimetrisch geregelten Materialentnahme aus einem Behälter. Der maschinentechnische Teil einer solchen Differential-Dosierwaage besteht aus einer Wägeeinrichtung, auf die ein Behälter montiert ist, aus dem mit Hilfe z. B. von Schnecken ein einstellbarer Schüttgutstrom abgezogen werden kann. Die Regelung einer Differential-Dosierwaage verstellt z. B. die Drehzahl der Austragsschnecke so, daß die Gewichtsabnahme im Behälter dem vorgegebenen Förderstärkensollwert entspricht.

Bei diesem Verfahren wird das Differential des Behältergewichtes geregelt. Insbesondere bei kleinen Förderstärken muß aus relativ kleinen Signaländerungen der erforderliche Regeleingriff bestimmt werden. Dies hat zur Folge, daß eine Differential-Dosierwaage sehr empfindlich reagiert wenn beispielsweise das Dosieraggregat unbeabsichtigt berührt wird. Das Berühren hat eine Fehldosierung zur Folge, falls nicht in der Signalverarbeitung Gegenmaßnahmen getroffen sind.

In der DE-OS 27 54 527 wird eine Einrichtung zum Erkennen von abrupten Signalstörungen bei Differential-Dosierwaagen beschrieben. Dabei wird die Austragszeit in Zeitintervalle eingeteilt. Innerhalb dieser Zeitintervalle werden Stichproben des Behältergewichtes erfaßt. Störungen werden dadurch erkannt, daß ein Rechner die Steigung der aktuellen Abförderungskurve während eines Zeitintervalls erkennt, und zwar mit Hilfe von Abtastproben, die man während dieses Zeitintervalls erhält. Diese Steigung wird mit einer Steigung verglichen, die mit Hilfe von Abtastproben während eines vorangegangenen Zeitintervalls errechnet wurde. Jede Änderung im Korrektursignal, d. h. jeder Regeleingriff, wird unterbunden, wenn ein Vergleich der beiden Steigungen eine Differenz ergibt, die größer als ein vorgegebener Schwellwert ist. Die weitere Dosierung erfolgt dann bis zum Ende der Störung volumetrisch.

Bei diesem Verfahren muß allerdings die Ansprechempfindlichkeit so eingestellt werden, daß betriebsmäßige Änderungen des Differentials infolge von Änderungen des Führungswertes nicht zu einer Störung führen.

Da bei der bekannten Anordnung mit Zeitintervallen gearbeitet wird, wobei eine bestimmte Anzahl von Abtastpunkten ein Zeitintervall definiert, ist eine Korrektur bei den nachfolgenden Meßwerten erst möglich, wenn das nächste Zeitintervall abgelaufen ist. Dies führt zwangsläufig zu einer verringerten Regelgeschwindigkeit.

Der Erfindung liegt deshalb die Aufgabe zugrunde, ein Verfahren und eine Vorrichtung der eingangs genannten Art so zu verbessern, daß Störungen des Wägesignals mit einfachen Mitteln möglichst rasch und sicher erkannt werden und nicht zu einem unbeabsichtigten Regelvorgang führen. Diese Aufgabe wird durch die in den Patentansprüchen angegebenen Merkmale gelöst. Die Ansprüche erfassen auch Ausgestaltungen des Erfindungsgedankens sowie eine Differential-Dosierwaage.

Bei dem erfindungsgemäßen Verfahren wird aus dem Gewichtsverlauf in der Vergangenheit, d. h. aus Vergangenheitswerten der Differential-Dosierwaage eine Vorhersage bzw. ein Schätzwert für den nächsten Meßwert des Behältergewichts ermittelt. Wirken keine störenden Kräfte auf den Behälter ein, entspricht der errechnete neue Schätzwert dem tatsächlichen neuen Meßwert recht genau. Im Falle einer Störkraft tritt eine Abweichung auf, die ermittelt wird. Die unerwünschte Störung wird jedoch dadurch ausgeschaltet, daß die neuen Schätzwerte aufgrund des störungsbehafteten Meßwertes und entsprechend rückgerechneten Meßwerten des Ausgangssigals der Wägevorrichtung ermittelt werden und die Regelung mit dem sich aus der Rückrechnung ergebenden unveränderten Istwert der Förderstärke fortgesetzt wird. Die Störung wirkt sich daher nicht aus und Regelung, Integration und Anzeige können praktisch unbeeinflußt von der Störung weiterlaufen.

Sollwertänderungen der Förderstärke können nach den Merkmalen von Anspruch 2 berücksichtigt werden. Dadurch wirken sich solche Änderungen nicht als Störung aus und die Regelung paßt sich schnell an den geänderten Sollwert an.

In der Zeichnung ist ein Ausführungsbeispiel der Erfindung schematisch dargestellt, das in der folgenden Beschreibung näher erläutert wird. Es zeigen:

Fig. 1     Schemadarstellung einer Korrektureinrichtung zur Ausschaltung von Störeinflüssen bei Differential-Dosierwaagen

Fig. 2     ein Diagramm mit der Darstellung einer Störung und ihrer Ausschaltung

Differential-Dosierwaagen sind in verschiedenen Ausführungen bekannt, so daß sich eine Beschreibung im einzelnen erübrigt. Die Erfindung ist bei den bekannten und auf Wägezellen oder anderen geeigneten Kraftmeßeinrichtungen abgestützten Dosierwaagen anwendbar.

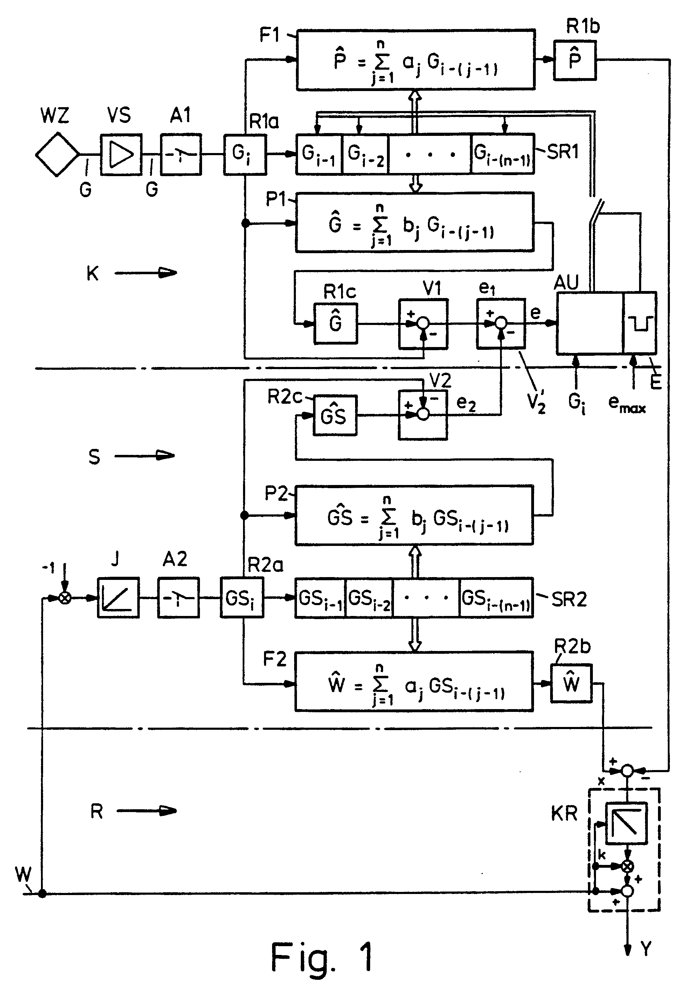

Nach Fig. 1 wird das von der Wägezelle WZ kommende Meßsignal G, ggf. nach Verstärkung in einem Verstärker VS, in einem Abtastglied A 1 fortlaufend abgetastet. Nach der Abtastung liegen einzelne diskrete Werte für das zu ermittelnde Gewicht vor. Der aktuelle Meßwert $G_i$ wird in einem Register R la gespeichert und nach einer unten beschriebenen Überprüfung einer Korrektureinrichtung K zugeführt, die im wesentlichen aus einem digitalen Filter F 1, einem Schieberegister SR 1, einem digitalen Vorhersagefilter oder Prädiktor P 1, einem Vergleicher V 1 sowie einer Auswerteeinrichtung AU und Speichern oder Registern R 1a, b, c besteht. Die Meßwerte werden als Berechnungsgrundlage in Filter F 1, Vorhersagefilter P 1, Schieberegister SR 1 usw. übernommen. Das Schieberegister SR 1 hat die Länge n-1 und speichert n-1 Vergangenheitswerte der Abtastwerte, nämlich $G_{i-1}$, $G_{i-2}$, ... $G_{i-(n-1)}$. Der aktuelle Abtastwert $G_i$ ist im Register R la gespeichert.

Der Meßwert $G_i$ und die Vergangenheitswerte des Schieberegisters SR 1 dienen zur Berechnung der augenblicklichen Förderstärke $\hat{P}$ in Filter F 1 und zur Vorhersage des nächsten Abtastwertes des Wägezellensignals bzw. des Behältergewichts oder Füllgewichts $\hat{G}$ im Vorhersagefilter P 1. Nach Durchführung der Rechenoperation in F 1 und P 1 werden die Werte im Schieberegister um eine Position nach rechts verschoben. Der Wert $\hat{P}$ wird, z. B. über ein Register R 1b, als Istwert dem Regler R für den Soll-Istwert-Vergleich zugeführt. Der Wert $\hat{G}$ wird in einen Speicher oder ein Register R 1c überführt und steht dann im nächsten Meßtakt zum Vergleich mit dem neuen Abtastwert $G_{i+1}$ zur Verfügung. Die Register R 1b und c können auch in den Filtern F 1 und P 1 integriert sein.

Das Filter F 1 und das Vorhersagefilter P 1 arbeiten in der gleichen Weise. Sie führen eine gewichtete Mittelwertbildung der n-1 im Schieberegister gespeicherten Vergangenheitswerte $G_{i-1}$, $G_{i-2}$, ... $G_{i-(n-1)}$ und des augenblicklichen Meßwertes $G_i$ durch. Die Koeffizienten $a_j$, $b_j$ der Filter (s. Formel bei F 1 und P 1 in Fig. 1), mit denen die im Schieberegister SR 1 gespeicherten Werte multipliziert werden, sind nach den gängigen Methoden der digitalen Filterungstechnik ausgelegt (FIR-Filter), z. B. nach der Methode der kleinsten Fehlerquadrate. Am Ausgang des Filters F 1 liegt nach jeder Operation der Istwert $\hat{P}$ für die Förderstärke, z. B. in Kilogramm/Stunde (kg/h) vor, am Ausgang des Vorhersagefilters P 1 ist der Schätzwert $\hat{G}$ für den nächsten Meßwert bzw. Abtastwert des Wägezellensignals z. B. in Kilogramm (kg) verfügbar.

Bei der erwähnten Überprüfung des augenblicklichen Meßwertes $G_i$ wird dieser zunächst mit dem im Register R 1c abgespeicherten Schätzwert $\hat{G}$ verglichen. Der Schätzwert $\hat{G}$ wurde im vorausgehenden Rechenzyklus oder Meßtakt im Vorhersagefilter P 1 gebildet. Er wird bei Beginn eines jeden neuen Meßtaktes zusammen mit dem neuen Meßwert $G_i$ dem Vergleicher V 1 zugeführt. Im Vergleicher V 1 wird aus den beiden Werten, z. B. durch Subtraktion, eine Differenz e 1 gebildet, die über einen weiteren Vergleicher V 2', der später beschrieben wird, als Differenz e der Auswerteeinrichtung AU zugeführt wird. In der Auswerteeinrichtung kann, z. B. mit Hilfe einer Einstellvorrichtung E ein Grenzwert oder Toleranzbereich $e_{max}$ für die Abweichung bzw. Differenz e eingestellt werden. Liegt die Differenz e innerhalb des eingestellten Grenzwertes, wird der neue Meßwert $G_i$ wie oben beschrieben ausgewertet.

Übersteigt die tatsächliche Abweichung e den eingestellten Grenzwert, wird das Schieberegister SR 1 neu initialisiert d. h. neu geladen. Hierbei wird ausgegangen von dem letzten augenblicklichen Meßwert $G_i$. Aufgrund dieses Meßwertes und des letzten Wertes für die Förderstärke $\hat{P}$ werden in der Auswerteeinrichtung AU neue Werte für das Schieberegister SR 1 zurückgerechnet. Mit den zurückgerechneten Vergangenheitswerten $G_{i-1}$, $G_{i-2}$, ... $G_{i-(n-1)}$ und dem aktuellen Meßwert $G_i$ wird im Störfall die Berechnung der Förderstärke $\hat{P}$ im Filter F 1 und die Vorhersage der Schätzwerte $\hat{G}$ im Vorhersagefilter P 1 fortgesetzt.

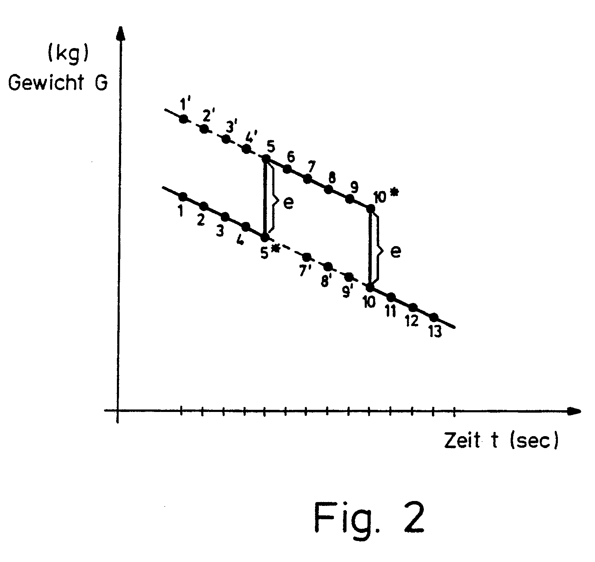

In Fig. 2 ist in einem Diagramm der Verlauf einer Störung des Wägezellensignals bzw. der abgetasteten Meßwerte G über der Zeit dargestellt. Bei den Meßwerten 1 - 4 liegen die tatsächlich gemessenen Werte $G_i$ und die jeweiligen Schätzwerte $\hat{G}$ des Vorhersagefilters P 1 innerhalb des eingestellten Toleranzbereiches $e_{max}$, so daß die Korrekturvorrichtung K nicht anspricht und die Regeleinrichtung R in bekannter Weise arbeitet.

Dem geschätzten Wert 5* steht bei der angenommenen Störung der tatsächliche Meßwert 5 gegenüber. Die Differenz e zwischen Meß- und Schätzwert übersteigt den Toleranzbereich, so daß die Korrekturvorrichtung anspricht. Aufgrund des tatsächlichen Meßwertes 5 und des Verlaufs der augenblicklichen Förderstärke $\hat{P}$ bzw. der früheren Meßwerte 4, 3, ... rechnet die Auswerteeinrichtung AU die Werte 4',3', ... zurück und lädt das Schieberegister SR 1 mit diesen Werten. Die Werte 4', 3'... ergeben sich aus den Werten 4, 3, ... und der Differenz e. Durch diese Operation wird der Wert der Förderstärke $\hat{P}$ des Filters F 1 nicht beeinflußt und bleibt gleich, wie sich aus Fig. 2 auch anschaulich ergibt: die durch die Meßwerte 1, 2, 3, 4 ... und 2', 3', 4', 5 ... gebildeten Geraden sind parallel. Das Vorhersagefilter P 1 rechnet aufgrund der neuen Werte des Schieberegisters SR 1 und mit dem aktuellen Meßwert $G_i$ als Ausgangsbasis den neuen Schätzwert $\hat{G}$ für Meßwert 6 usw. aus.

Solange die neuen Schätzwerte $\hat{G}$ und die nun in den nachfolgenden Meßzyklen gemessenen tatsächlichen Meßwerte Gi innerhalb des vorgegebenen Toleranzbereiches liegen, arbeitet die Regelung in bekannter Weise weiter, d. h. die Korrekturvorrichtung K spricht nicht an. Bei einer erneuten Störung, wenn z. B. dem Schätzwert 10* der tatsächliche Meßwert 10 gegenübersteht, spricht die Korrekturvorrichtung wieder an und es ergibt sich der gleiche Verfahrensablauf wie oben beschrieben, in vorliegendem Fall mit Rückrechnung der Werte 9', 8'..., neuer Ladung des Schieberegisters mit diesen Werten, Berechnung des Schätzwertes 11 usw.

Durch das beschriebene Verfahren vermindert sich der Einfluß von Störungen stark bzw. wird für eine bestimmte Klasse von Störungen sogar vollständig ausgeschaltet. Das Beispiel nach Fig. 2 entspricht dem Abstellen und Wegnehmen eines Gegenstandes auf der Waage im laufenden Betrieb. In diesem Fall wird der Einfluß der Störung durch die Erfindung vollständig ausgeschaltet. Regelung, Integration und Anzeige laufen ohne spürbaren Übergang weiter.

Das Verfahren kann in der beschriebenen Weise zur Anwendung kommen. Eine weitere Ausbildung des Verfahrens ergibt sich, wenn auch Änderungen des Förderstärkensollwertes berücksichtigt werden.

Bei einer Änderung des Förderstärkensollwertes W kann die zulässige Störabweichung bzw. der Toleranzbereich für eine Störung an den neuen Sollwert angepaßt werden. Hierzu muß das Zeitverhalten von Regelstrecke und Meßwerterfassung berücksichtigt werden. Dies geschieht durch Simulation der Regelstrecke in einer Schaltungsanordnung, die im mittleren Teil von Fig. 1, Streckensimulation S, dargestellt ist.

Die Streckensimulation S weist, wie die beschriebene Korrekturanordnung K, ein Filter F 2, ein Schieberegister SR 2, ein Vorhersagefilter (Prädiktor) P 2 sowie Speicher oder Register R 2a, b, c auf. Die Anordnung arbeitet in ähnlicher Weise wie die Korrekturvorrichtung, wobei das Sollwertsignal W für die Förderstärke zunächst auf einen Integrator J, der die Regelstrecke nachbildet, geführt und danach in einem Abtastglied A 2 abgetastet und als Sollmeßwert $GS_i$ dem Filter F 2, dem Vorhersagefilter P 2 und dem Schieberegister SR 2 zugeführt wird. Das in der Darstellung vor dem Integrator angegebene Vorzeichen berücksichtigt den tatsächlichen Signalverlauf, d. h. die Gewichtsabnahme des Wägebehälters.

Am Ausgang des Filters F 2 liegt der Sollwert $\hat{W}$ für die Förderstärke an, der dem Regler R zugeführt wird. Am Ausgang des Vorhersagefilters P 2 ist ein Soll-Schätzwert $\hat{GS}$ verfügbar, der im Register R 2c für den Vergleich mit dem Sollmeßwert $GS_i$ im nachfolgenden Meßtakt abgelegt wird. Die im Vergleicher V 2 gebildete Abweichung e 2, entsprechend $\hat{GS} - GS_i$, die bei Sollwertänderungen auftritt, wird dem Vergleicher V 2' zugeführt.

Solange der Sollwert W der Förderstärke konstant bleibt, ergeben sich im Vergleicher V 2 keine Abweichungen, d. h. das Ausgangssignal e 2 des Vergleichers wird zu Null. Bei Sollwertänderungen ergibt sich im Vergleicher eine Abweichung e 2, die der jetzt auftretenden Abweichung e 1 im Vergleicher V 1 entspricht, da die Korrekturvorrichtung bzw. das Vorhersagefilter P 1 ebenfalls die Abweichung von Meßwert und Schätzwert feststellt. Die Abweichungen e 1 und e 2 werden dem Vergleicher V 2' zugeführt und heben sich hier gegenseitig auf, so daß die Korrekturvorrichtung K aufgrund eines geänderten Sollwertes nicht anspricht. Dadurch wird es möglich, die Ansprechempfindlichkeit der Korrektureinrichtung beliebig hoch einzustellen, ohne betriebsmäßig auftretende Sollwertänderungen berücksichtigen zu müssen.

Die Regeleinrichtung R besteht aus einem Vergleichsglied für den Istwert $\hat{P}$ und den Sollwert $\hat{W}$ der Förderstärke und einem Korrekturregler KR, der das Stellsignal Y für den Antrieb des Dosieraggregats liefert. Im Vergleichsglied wird ein vorgegebenes Sollwert-Signal für die Förderstärke $\hat{W}$ und der in der Korrekturvorrichtung K ermittelte Istwert $\hat{P}$ verglichen und als Regeldifferenz (x) auf den Korrekturregler aufgeschaltet. Das Sollwertsignal $\hat{W}$ kann beispielsweise wie oben bei der Streckensimulation S beschrieben, ermittelt und vorgegeben werden.

Dem Regler wird außerdem das Signal für den Sollwert der Förderstärke W direkt zugeführt. Mit Hilfe des Förderstärkensignals W und der Korrekurgröße k, die im Korrekturregler gebildet wird, wird bei dem beschriebenen Ausführungsbeispiel im Betrieb der Vorrichtung das Stellsignal Y für die Beeinflussung der Austragsrate bzw. Förderstärke, z. B. der Drehzahl einer Austragsschnecke am Waagenbehälter, gebildet. Hierbei folgt die Stellvorrichtung, also z. B. der Motor der Austragsschnecke, dem Stellsignal praktisch verzögerungsfrei. Dadurch ist es möglich, das Sollwertsignal W zur Vorwärtssteuerung zu verwenden.

Die beschriebene Signalverarbeitung und Regelung kann sowohl hardwaremäßig mit integrierten Schaltkreisen als auch softwaremäßig mit Mikroprozessor oder Rechner realisiert werden.

**Ansprüche**

1.   Verfahren zur Regelung einer Differential-Dosierwaage, insbesondere für Schüttgüter, bei dem das Ausgangssignal einer Wägevorrichtung fortlaufend gemessen und gespeichert wird und die Meßwerte für die Ermittlung der Förderstärke ($\hat{P}$) verwendet werden, wobei die Austragsrate bzw. Förderstärke ($\hat{P}$) der Dosierwaage durch Soll-Istwert-Vergleich geregelt wird und wobei im Fall einer Störung mit einer Abweichung des Ausgangssignals (G) der Wägevorrichtung von einem festgelegten Toleranzbereich Maßnahmen zur Ausschaltung dieser Störung getroffen werden, dadurch gekennzeichnet, daß aus Meßwerten ($G_i$) des Ausgangssignals (G) der Wägevorrichtung ein Schätzwert ($\hat{G}$) für den nächsten Meßwert der Wägevorrichtung gebildet wird, daß der gebildete Schätzwert ($\hat{G}$) mit dem nächsten tatsächlichen Meßwert ($G_i$) verglichen wird, daß bei Überschreiten des festgelegten Toleranzbereiches ein neuer Schätzwert für den nächsten Meßwert auf der Grundlage des letzten tatsächlichen Meßwertes ($G_i$) unter der Annahme gebildet wird, daß sich der Istwert der Förderstärke ($\hat{P}$) nicht verändert hat und daß trotz der Störung die Regelung der Förderstärke mit dem unveränderten Istwert der Förderstärke ($\hat{P}$) fortgesetzt wird.

2. Verfahren nach Anspruch 1, dadurch gekennzeichnet, daß bei Sollwertänderungen der Förderstärke und einer Abweichung des Ausgangssignals der Wägevorrichtung vom festgelegten Toleranzbereich die Abweichung zwischen dem Meßwert ($G_i$) und dem Schätzwert ($\hat{G}$) in der Signalverarbeitung kompensiert oder unterdrückt wird.

3. Verfahren nach Anspruch 1 oder 2, dadurch gekennzeichnet, daß das Ausgangssignal (G) der Wägevorrichtung, ggf. nach Verstärkung, abgetastet wird, daß die abgetasteten Meßwerte ($G_i$) jeweils einem Register (R 1a), einem Filter (F 1), einem Schieberegister (SR 1), einem Vorhersagefilter (P 1), einem Vergleicher (V 1) sowie einer Auswerteeinrichtung (AU) zugeführt werden, daß im Vergleicher (V 1) zunächst ein Vergleich zwischen dem letzten abgetasteten Meßwert (G) und einem im Vorhersagefilter (P 1) im vorausgegangenen Meßzyklus gebildeten und in einem Register (R 1c) abgelegten Schätzwert ($\hat{G}$) durchgeführt wird und daß danach

  a) bei einer Abweichung (e 1), die innerhalb des festgelegten Toleranzbereiches ($e_{max}$) liegt, aus Vergangenheitswerten ($G_{i-1}$, $G_{i-2}$ ... $G_{i-(n-1)}$) des Schieberegisters (SR 1) und dem Meßwert ($G_i$) im Filter (F 1) der Istwert der Förderstärke ($\hat{P}$) und im Vorhersagefilter (P 1) der Schätzwert ($\hat{G}$) für den nächsten Meßwert ($G_{i+1}$) gebildet wird und daß der Schätzwert ($\hat{G}$) im Register (R 1c) abgelegt wird,

  b) bei einer Abweichung (e 1), die außerhalb des festgelegten Toleranzbereiches ($e_{max}$) liegt, die Auswerteeinrichtung (AU) durch den Vergleicher (V 1) angesteuert wird, daß die Auswerteeinrichtung (AU) das Schieberegister (SR 1) auf der Grundlage des letzten tatsächlichen Meßwertes so mit neu errechneten Meßwerten belegt, daß im Filter (F 1) die gleiche Förderstärke ($\hat{P}$) wie vor der Störung gebildet wird und im Vorhersagefilter (P 1) ein dem letzten tatsächlichen Meßwert (G) und der Förderstärke ($\hat{P}$) entsprechender Schätzwert ($\hat{G}$) für das Ausgangssignal der Wägevorrichtung erzeugt und im Register (R 1c) abgelegt wird.

4. Verfahren nach Anspruch 2 oder 3, dadurch gekennzeichnet, daß der Sollwert (W) für die Förderstärke einem Integrator (I) zugeführt wird, daß das Ausgangssignal des Integrators abgetastet und als Sollmeßwert ($GS_i$) jeweils einem Register (2a), einem Filter (F 2), einem Schieberegister (SR 2), einem Vorhersagefilter (P 2) und einem Vergleicher (V 2) zugeführt wird, daß im Vergleicher (V 2) ein Vergleich zwischen dem letzten abgetasteten Sollmeßwert ($GS_i$) und einem im Vorhersagefilter (P 2) im vorausgegangenen Meßzyklus gebildeten und im einem Register (R 2c) abgelegten Sollschätzwert ($\hat{GS}$) durchgeführt wird, daß eine sich ergebende Abweichung (e 2) einem weiteren Vergleicher (V 2') zugeführt wird, in dem mit der Abweichung (e 1) aus dem Vergleicher (V 1) die Abweichung (e) gebildet wird, die der Auswerteeinrichtung (AU) zugeführt wird, und daß aus den Vergangenheitswerten ($GS_{i-1}$, $GS_{i-2}$, ... $GS_{i-(n-1)}$) des Schieberegisters (SR 2) sowie dem Sollmeßwert ($GS_i$) in Filter (F 2) der Sollwert ($\hat{W}$) der Förderstärke für den Vergleich mit dem Istwert ($\hat{P}$) und im Vorhersagefilter (P 2) ein Sollschätzwert ($\hat{GS}$) gebildet und letzterer im Register (R 2c) abgelegt wird.

5. Differentialdosierwaage, insbesondere für Schüttgüter, mit einem Behälter, einer Austragsvorrichtung für das aus dem Behälter auszutragende Gut, einer Wägevorrichtung zur Abstützung des Behälters und/oder der Austragsvorrichtung sowie einer Regeleinrichtung (R) zur Regelung der Förderstärke ($\hat{P}$) des aus dem Behälter bzw. der Austragsvorrichtung ausgetragenen Gutes, zur Durchführung des Verfahrens nach einem der Ansprüche 1 bis 4, dadurch gekennzeichnet, daß der Regeleinrichtung (R) zur Regelung der Förderstärke eine Korrektureinrichtung (K) vorgeschaltet ist, die ein digitales Filter (F 1), ein Schieberegister (SR 1), ein digitales Vorhersagefilter (P 1), einen Vergleicher (V 1), eine Auswertevorrichtung (AU) sowie eine Abtastvorrichtung (A 1) zum Abtasten des Ausgangssignals (G) der Wägevorrichtung aufweist, wobei abgetastete Meßwerte ($G_i$) des Ausgangssignals (G) der Wägevorrichtung dem Filter (F 1), dem Schieberegister (SR 1), dem Vorhersagefilter (P 1), dem Vergleicher (V 1) und der Auswerteeinrichtung (AU) zugeführt werden, daß das Filter (F 1) den Istwert für die Förderstärke ($\hat{P}$) und das Vorhersagefilter (P 1) einen Schätzwert ($\hat{G}$) für den nächsten Meßwert ($G_i$) des Ausgangssignals der Wägevorrichtung liefert und daß die Auswerteeinrichtung (AU) für das Schieberegister (SR 1) aufgrund des letzten Meßwertes (G) und der Förderstärke ($\hat{P}$) rückgerechneten Meßwerte liefert, wenn im Vergleicher (V 1) eine unzulässige Abweichung (e 1) zwischen letztem Meßwert ($G_i$) und Schätzwert ($\hat{G}$) festgestellt wird.

6. Differential-Dosierwaage nach Anspruch 5, dadurch gekennzeichnet, daß die Korrektureinrichtung (K) mit einer Einrichtung zur Streckensimulation (S) in Verbindung steht, die einen Integrator (I) für das Sollwertsignal (W) der Förderstärke mit einer nachgeschalteten Abtastvorrichtung (A 2), ein Filter (F 2) ein Schieberegister (SR 2) ein Vorhersagefilter (P 2) sowie Vergleicher (V 2) und (V2') aufweist, wobei die Signale der Abtastvorrichtung (A 2) dem Filter (F 2), dem Schieberegister (SR 2), dem Vorhersagefilter (P 2) und dem Vergleicher (V 2) zugeführt werden, daß das Filter (F 2) einen Wert für die Sollförderstärke ($\hat{W}$) für den Vergleich mit dem Istwert ($\hat{P}$) und das Vorhersagefilter (P 2) einen Soll-Schätzwert ($\hat{GS}$) für den nächsten abgetasteten Soll-Meßwert ($GS_i$) liefert.

7. Differential-Dosierwaage nach Anspruch 5 oder 6, dadurch gekennzeichnet, daß den Filtern (F 1, 2) und Vorhersagefiltern (P 1, 2) Register (1a, 2a) vorgeschaltet und weitere Register (1b, c; 2b, c) nachgeschaltet sind.

8. Differential-Dosierwaage nach einem der Ansprüche 5 bis 7, dadurch gekennzeichnet, daß die Korrektureinrichtung (K) und/oder die Streckensimulation (S) durch Rechenprogramme realisiert bzw. nachgebildet werden.

**Claims**

1. A method of regulating a differential distribution weighing means, more particularly for bulk goods, in which the output signal of a weighing device is measured and stored continuously and the measured values are used for ascertaining the conveyer power ($\hat{P}$), in which the delivery rate and/or conveyer power ($\hat{P}$) of the distribution weighing means is regulated by desired/actual value comparison and in which in the case of a disruption with a deviation of the output signal (G) of the weighing device from a fixed tolerance range measures are taken to eliminate this disruption, **characterised in that** an estimated value ($\hat{G}$) for the next measured value of the weighing device is formed from measured values ($G_i$) of the output signal (G) of the weighing device, that the formed estimated value ($\hat{G}$) is compared with the next actual measured value ($G_i$), that when the fixed tolerance range is exceeded a new estimated value for the next measured value is formed on the basis of the last actual measured value ($G_i$) under the assumption that the actual value of the conveyer power ($\hat{P}$) has not changed and that despite the disruption the regulation of the conveyer power is continued with the unchanged actual value of the conveyer power ($\hat{P}$).

2. A method according to claim 1, **characterised in that** with changes in the desired value of the conveyer power and a deviation of the output signal of the weighing device from the fixed tolerance range the deviation between the measured value ($G_i$) and the estimated value ($G^\wedge$) is compensated or suppressed in the signal processing.

3. A method according to claim 1 or 2, **characterised in that** the output signal (G) of the weighing device is sampled possibly after amplification, that the sampled measured values ($G_i$) are supplied in each case to a register (R 1a), a filter (F 1), a shift register (SR 1), a forecast filter (P 1), a comparator (V 1) and an evaluation device (AU), that in the comparator (V 1) initially a comparison is carried out between the last sampled measured value (G) and an estimated value ($\hat{G}$) which is formed in the forecast filter (P 1) in the preceding measuring cycle and is deposited in a register (R 1c) and that then:
   a) with a deviation (e 1), which is within the fixed tolerance range ($e_{max}$), the actual value of the conveyer power ($\hat{P}$) is formed from past values ($G_{i-1}$, $G_{i-2}$ ... $G_{i-(n-1)}$) of the shift register (SR 1) and from the measured value ($G_i$) in the filter (F 1) and the estimated value ($\hat{G}$) for the next measured value ($G_{i+1}$)

is formed in the forecast filter (P 1) measured value ($G_{i+1}$) is formed in the forecast filter (P 1) and that the estimated value ($\widehat{G}$) is deposited in the register (R 1c),

b) with a deviation (e 1), which is outside the fixed tolerance range ($e_{max}$), the evaluation device (AU) is driven by the comparator (V 1), that the evaluation device (AU) loads the shift register (SR 1) on the basis of the last actual measured value with recalculated measured values so that the same conveyer power ($\widehat{P}$) as before the disruption is formed in the filter (F 1) and an estimated value ($\widehat{G}$) for the output signal of the weighing device, which corresponds to the last actual measured value (G) and to the conveyer power ($\widehat{P}$) is produced in the forecast filter (P 1) and is deposited in the register (R 1c).

4. A method according to claim 2 or 3, **characterised in that** the desired value (W) for the conveyer power is supplied to an integrator (I), that the output signal of the integrator is sampled and supplied as a desired measured value.($GS_i$) in each case to a register (2a), a filter (F 2), to a shift register (SR 2), a forecast filter (P 2) and a comparator (V 2), that in the comparator (V 2) a comparison is made between the last sampled desired measured value ($GS_i$) and a desired estimated value ($\widehat{GS}$) which is formed in the forecast filter (P 2) in the preceding measuring cycle and is deposited in a register (R 2c), that an arising deviation (e 2) is supplied to a further comparator (V 2'), in which the deviation (e) is formed by the deviation (e 1) from the comparator (V 1), the deviation (e) being supplied to the evaluation device (AU), and that the desired value ($\widehat{W}$) of the conveyer power is formed from the past values ($GS_{i-1}$, $GS_{i-2}$, ... $GS_{i-(n-1)}$) of the shift register (SR 2) and from the desired measured value ($GS_i$) in filter (F 2), for the comparison with the actual value ($\widehat{P}$) and a desired estimated value ($\widehat{GS}$) is formed in the forecast filter (P 2) and is deposited in the register (R 2c).

5. A differential distribution weighing means, more particularly for bulk goods, with a container, a delivery device for the material to be discharged from the container, a weighing device for supporting the container and/or the delivery device and a regulating device (R) for regulating the conveying power ($P\widehat{\phantom{P}}$) of the material to be delivered from the container and/or from the delivery device, for carrying out the method according to any one of claims 1 to 4, **characterised in that** a correction device (K) is connected in front of the regulating device (R) for regulating the conveyer power, which correction device has a digital filter (F 1), a shift register (SR 1), a digital forecast filter (P 1), a comparator (V 1), an evaluation device (AU) and a sampling device (A 1) for sampling the output signal (G) of the weighing device, in which sampled measured values ($G_i$) of the output signal (G) of the weighing device are supplied to the filter (F 1), to the shift register (SR 1), to the forecast filter (P 1), to the comparator (V 1) and the evaluation device (AU), that the filter (F 1) delivers the actual value for the conveyer power ($\widehat{P}$) and the forecast filter (P 1) delivers an estimated value ($\widehat{G}$) for the next measured value ($G_i$) of the output signal of the weighing device and that the evaluation device (AU) delivers back-calculated measured values for the shift register (SR 1) on the basis of the last measured value ($G_i$) and the conveyer power ($\widehat{P}$) when an impermissible deviation (e 1) is established in the comparator (V 1) between the last measured value ($G_i$) and the estimated value ($\widehat{G}$).

6. A differential distribution weighing means according to claim 5, **characterised in that** the correction device (K) is in connection with a device for path simulation (S) which has an integrator (I) for the desired value signal (W) of the conveyer power with a post-connected sampling device (A 2), a filter (F 2) a shift register (SR 2) a forecast filter (P 2) and comparators (V 2) and (V2'), in which the signals of the sampling device (A 2) are supplied to the filter (F 2), to the shift register (SR 2), to the forecast filter (P 2) and to the comparator (V 2), that the filter (F 2) delivers a value for the desired conveyer power ($\widehat{W}$) for the comparison with the actual value ($\widehat{P}$) and the forecast filter (P 2) delivers a desired estimated value ($\widehat{GS}$) for the next sampled desired measured value ($GS_i$).

7. A differential distribution weighing means according to claim 5 or 6, **characterised in that** registers (1a, 2a) are connected in front of the filters (F 1, 2) and forecast filters (P 1, 2) and further registers (1b, c; 2b, c) are connected thereafter.

8. A differential distribution weighing means according to any one of claims 5 to 7, **characterised in that** the correction device (K) and/or the path simulation device (S) are implemented and/or simulated by computer programs.

## Revendications

1. Procédé de réglage d'une balance de dosage différentielle, en particulier pour matériaux en vrac, dans lequel on mesure et l'on mémorise en continu le signal de sortie d'un dispositif de pesée et l'on utilise les valeurs de mesure pour la détermination du débit $(\hat{P})$, la cadence de décharge ou débit $(\hat{P})$ de la balance de dosage étant réglé par comparaison valeur prescrite-valeur réelle et, en cas de perturbation avec un écart du signal de sortie (G) du dispositif de pesée par rapport à un intervalle de tolérance fixé, des mesures étant prises pour supprimer cette perturbation, caractérisé en ce qu'on forme à partir de valeurs de mesure $(G_i)$ du signal de sortie (G) du dispositif de pesée une valeur estimative $(\hat{G})$ pour la valeur de mesure suivante du dispositif de pesée, en ce qu'on compare la valeur estimative $(\hat{G})$ formée à la valeur de mesure effective suivante $(G_i)$, en ce qu'en cas de dépassement de l'intervalle de tolérance fixé, on forme une nouvelle valeur estimative pour la valeur de mesure suivante sur la base de la dernière valeur de mesure effective $(G_i)$ en supposant que la valeur réelle du débit $(\hat{P})$ n'a pas changé et que, malgré la perturbation, le réglage du débit se poursuit avec la valeur réelle inchangée du débit $(\hat{P})$.

2. Procédé selon la revendication 1, caractérisé en ce qu'en cas de variations de valeur prescrite du débit et d'un écart du signal de sortie du dispositif de pesée par rapport à l'intervalle de tolérance fixé, on compense ou on supprime l'écart entre la valeur de mesure $(G_i)$ et la valeur estimative $(\hat{G})$ dans le traitement du signal.

3. Procédé selon la revendication 1 ou 2, caractérisé en ce qu'on échantillonne le signal de sortie (G) du dispositif de pesée, éventuellement après amplification, en ce qu'on transmet les valeurs de mesure échantillonnées $(G_i)$ respectivement à un registre (R 1a), à un filtre (F 1), à un registre à décalage (SR 1), à un filtre de prédiction (P 1), à un comparateur (V 1) et à un dispositif de traitement (AU), en ce qu'on effectue dans le comparateur (V 1) d'abord une comparaison entre la dernière valeur de mesure (G) échantillonnée et une valeur estimative $(\hat{G})$ formée dans le filtre de prédiction (P1) au cours du cycle de mesure précédent et placée dans un registre (R 1c), et en ce que ensuite:

   a) dans le cas d'un écart (e 1) situé à l'intérieur de l'intervalle de tolérance fixé $(e_{max})$, on forme à partir des valeurs passées $(G_{i-1}, G_{i-2}, ... G_{i-(n-1)})$ du registre décalage (SR 1) et de la valeur de mesure $(G_i)$ dans le filtre (F 1) la valeur réelle du débit $(\hat{P})$ et dans le filtre de prédiction (P 1) la valeur estimative $(\hat{G})$ pour la valeur de mesure suivante $(G_{i+1})$, et l'on place la valeur estimative $(\hat{G})$ dans le registre (R 1c).

   b) dans le cas d'un écart (e 1) qui sort de l'intervalle de tolérance fixé $(e_{max})$ le dispositif de traitement (AU) est attaqué par le comparateur (V 1), le dispositif de traitement (AU) charge ainsi le registre à décalage (SR 1) sur la base de la dernière valeur de mesure effective avec des valeurs de mesure nouvellement calculées, on forme dans le filtre (F 1) le même débit $(\hat{P})$ qu'avant la perturbation et l'on engendre dans le filtre de prédiction (P 1) une valeur estimative $(\hat{G})$ pour le signal de sortie du dispositif de pesée correspondant à la dernière valeur de mesure effective (G) et au débit $(\hat{P})$ et on la place dans le registre (R 1c).

4. Procédé selon la revendication 2 ou 3, caractérisé en ce qu'on transmet la valeur prescrite (W) pour le débit à un intégrateur (I), en ce qu'on transmet le signal de sortie de l'intégrateur, échantillonné et en tant que valeur de mesure prescrite $(GS_i)$, respectivement à un registre (2a), à un filtre (F 2), à un registre à décalage (SR 2), à un filtre de prédiction (P 2) et à un comparateur (V 2), en ce qu'on effectue dans le comparateur (V 2) une comparaison entre la dernière valeur de mesure prescrite échantillonnée $(GS_i)$ et une valeur estimative prescrite $(\hat{GS})$ formée dans le filtre de prédiction (P 2) au cours du cycle de mesure précédent et placée dans un registre (R 2c), en ce qu'on transmet un écart (e 2) se présentant à un autre comparateur (V 2') dans lequel on forme l'écart (e) avec l'écart (e 1) provenant du comparateur (V 1), que l'on transmet au dispositif de traitement (AU), et en ce qu'on forme à partir des valeurs passées $(GS_{i-1}, GS_{i-2}, ... GS_{i-(n-1)})$ du registre à décalage (SR 2) ainsi que de la valeur prescrite $(GS_i)$ dans le filtre (F 2) la valeur prescrite $(\hat{W})$ du débit pour la comparaison avec la valeur réelle $(\hat{P})$ et dans le filtre de prédiction (P 2) une valeur estimative $(\hat{GS})$ et l'on place cette dernière dans le registre (R 2c).

5. Balance de dosage différentielle, en particulier pour matériaux en vrac, comportant un récipient, un dispositif de déversement pour le matériau à décharger du récipient, un dispositif de pesée pour l'appui du récipient et/ou du dispositif de déversement, ainsi qu'un dispositif de réglage (R) pour le réglage du débit (P̂) du matériau déchargé du récipient ou du dispositif de déversement, pour mettre en oeuvre le procédé selon l'une des revendications 1 à 4, caractérisé en ce que le dispositif de réglage (R) pour le réglage du débit est précédé par un dispositif de correction (K) qui comporte un filtre numérique (F 1), un registre à décalage (SR 1), un filtre de prédiction numérique (P 1), un comparateur (V 1), un dispositif de traitement (AU), ainsi qu'un dispositif d'échantillonnage (A 1) pour échantillonner le signal de sortie (G) du dispositif de pesée, en transmettant les valeurs de mesure échantillonnées (G_i) du signal de sortie (G) du dispositif de pesée au filtre (F 1), au registre à décalage (SR 1), au filtre de prédiction (P 1), au comparateur (V 1) et au dispositif de traitement (AU), en ce que le filtre (F 1) fournit la valeur réelle pour le débit (P̂) et le filtre de prédiction (P 1) une valeur estimative (Ĝ) pour la valeur de mesure suivante (G_i) du signal de sortie du dispositif de pesée, et en ce que le dispositif de traitement (AU) pour le registre à décalage (SR 1) fournit des valeurs de mesure recalculées sur la base de la dernière valeur de mesure (G_i) et du débit (P̂), lorsque, dans le comparateur (V 1), un écart inadmissible (e 1) entre la dernière valeur de mesure (G_i) et la valeur estimative (Ĝ) est constaté.

6. Balance de dosage différentielle selon la revendication 5, caractérisée en ce que le dispositif de correction (K) est en liaison avec un dispositif de simulation de parcours (S) qui comporte un intégrateur (I) pour le signal de valeur prescrite (W) du débit à la suite duquel est monté un dispositif d'échantillonnage (A 2), un filtre (F 2), un registre à décalage (SR 2), un filtre de prédiction (P 2), ainsi que des comparateurs (V 2) et (V2'), les signaux du dispositif d'échantillonnage (A 2) étant transmis a un filtre (F 2), au registre à décalage (SR 2), au filtre de prédiction (P 2) et au comparateur (V 2), en ce que le filtre (F 2) fournit une valeur pour le débit prescrit (Ŵ) pour la comparaison avec la valeur réelle (P̂) et le filtre de prédiction (P 2) une valeur estimative prescrite ( ĜŜ) pour la valeur de mesure prescrite échantillonnée (GS_i) suivante.

7. Balance de dosage différentielle selon la revendication 5 ou 6, caractérisée en ce que les filtres (F1, 2), et les filtres de prédiction (P1, 2) sont précédés par des registres (1a, 2a) suivis par d'autres registres (1b, c; 2b, c).

8. Balance de dosage différentielle selon l'une des revendications 5 à 7, caractérisée en ce que le dispositif de correction (K) et/ou la simulation de parcours (S) sont réalisés ou simulés par des programmes de calcul.

F1

$$\hat{P} = \sum_{j=1}^{n} a_j \, G_{i-(j-1)}$$

R1b

$\hat{P}$

WZ   VS   A1   R1a

G   G

$G_i$   | $G_{i-1}$ | $G_{i-2}$ | $\cdot\;\cdot\;\cdot$ | $G_{i-(n-1)}$ |   SR1

K →

P1

$$\hat{G} = \sum_{j=1}^{n} b_j \, G_{i-(j-1)}$$

R1c   V1   $e_1$   AU

$\hat{G}$   e

$V_2'$   $G_i$   $e_{max}$   E

R2c   V2

$\hat{GS}$   $e_2$

S →

P2

$$\hat{GS} = \sum_{j=1}^{n} b_j \, GS_{i-(j-1)}$$

-1   J   A2   R2a

$GS_i$   | $GS_{i-1}$ | $GS_{i-2}$ | $\cdot\;\cdot\;\cdot$ | $GS_{i-(n-1)}$ |   SR2

F2

$$\hat{W} = \sum_{j=1}^{n} a_j \, GS_{i-(j-1)}$$

R2b

$\hat{W}$

R →

KR

x

k

W

Y

# Fig. 1

Fig. 2